Europäisches Patentamt

European Patent Office

Office européen des brevets

(11) Publication number: **0 278 451**
**A2**

(12) **EUROPEAN PATENT APPLICATION**

(21) Application number: 88101788.3

(51) Int. Cl.⁴: **H04N 1/32**

(22) Date of filing: 08.02.88

(30) Priority: 09.02.87 JP 28434/87

(43) Date of publication of application:
**17.08.88 Bulletin 88/33**

(84) Designated Contracting States:
**DE FR GB**

(71) Applicant: **NEC CORPORATION**
**33-1, Shiba 5-chome, Minato-ku**
**Tokyo 108(JP)**

(72) Inventor: **Yamada, Siniji**
**c/o NEC Corporation 33-1, Shiba 5-chome**
**Minato-Ku Tokyo(JP)**

(74) Representative: **Vossius & Partner**
**Siebertstrasse 4 P.O. Box 86 07 67**
**D-8000 München 86(DE)**

(54) **Facsimile communication having call transfer means.**

(57) In a facsimile communication system, a first connection is established from a first facsimile station (A) through a general switched telephone network (N) to a second facsimile station (B1). The second station (B1) includes a supervisory circuit (2B₁) that determines whether the own station is normal or abnormal. In response to the establishment of the first connection, the second station (B1) returns a normal command signal to request transmission of a facsimile message when the own station is detected as being normal or returns a call transfer command signal when the own station is detected as being abnormal. In response to the call transfer command signal, the first station (A) releases the first connection and establishes a second connection through the network (N) to a third, nearby station (B2) in accordance with the received command signal.

FIG.3

## "Facsimile Communication Having Call Transfer Means"

The present invention relates to facsimile communication and more specifically to facsimile communication which permits a call to be automatically transferred to a second station in the event that a first called station is incapable of receiving facsimile messages.

Hitherto, attempts to establish a facsimile connection are often aborted when the called station is not functioning properly to receive messages. Attendant personnel of the called station must be alerted through a telephone call to clear the trouble. In addition, an emergency message is left unattended when attendant personnel must leave the location of the facsimile station for an extended period of time.

It has therefore been desired to transfer a facsimile call to another nearby station in the event of a trouble or an absence of attendants for an extended period time.

## SUMMARY OF THE INVENTION

It is therefore an object of the present invention to enable a facsimile call to be transferred from a first station to a second station in the event of a trouble in the first station or a prolonged lack of attention to messages to the first station.

In accordance with the present invention, a first connection is established from a first facsimile station through a general switched telephone network to a second facsimile station which determines whether the own station is normal or abnormal. In response to the establishment of the first connection, the second station returns a normal command signal to the first station to request transmission of a facsimile message when the own station is detected as being normal or returns a call transfer command signal to the first station when the own station is detected as being abnormal. In response to the call transfer command signal from the second station, the first station releases the first connection and establishes a second connection through the network to a third facsimile station in accordance with the received command signal.

Preferably, the second facsimile station comprises a plurality of manually operated switches respectively associated with a plurality of third facsimile stations which may be located close to the second station. A numeric keypad is used for storing the addresses of the third facsimile stations into said memory. In response to the establishment of the first connection, one of the stored addresses is recalled from the memory in accordance with an operated one of the switches or selectively recalled from the memory when the abnormal condition is detected for transmission to the first station.

## BRIEF DESCRIPTION OF THE DRAWINGS

The present invention will be described in further detail with reference to the accompanying drawings, in which:

Fig. 1 is a block diagram of a facsimile communication system;

Fig. 2 is a block diagram of each of the facsimile stations of Fig. 1;

Fig. 3 is a block diagram of the facsimile communication system useful for describing the operation of the system; and

Fig. 4 is an illustration of procedures for establishing facsimile calls.

## DETAILED DESCRIPTION

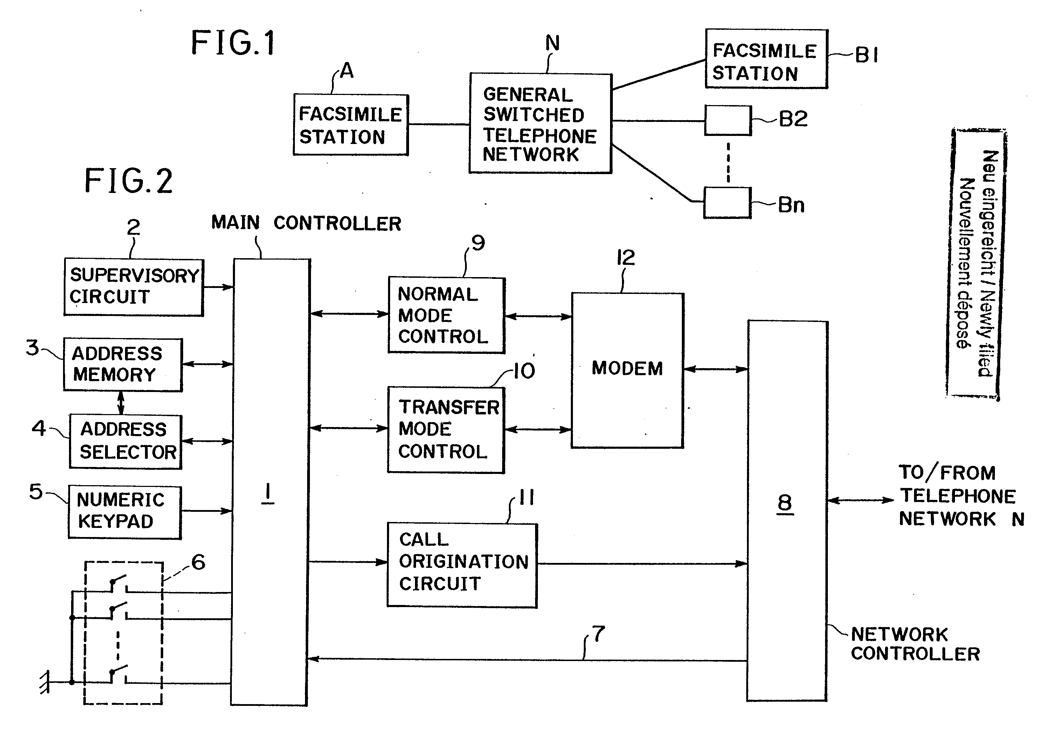

In Fig. 1, a facsimile communication system according to a preferred embodiment of the invention comprises facsimile stations A and a group of facsimile stations B1 through Bn interconnected by a general switched telephone network N. Facsimile stations B1 through Bn are located within a relatively small area.

In Fig. 2, each of the facsimile stations comprises a main controller 1 which receives control signals from a supervisory circuit 2, an address memory 3, an address selector 4, a numeric keypad 5 and a call transfer circuit 6. Supervisory circuit 2 monitors the facsimile equipment to determine whether it is ready to receive message signals and generates an alarm signal when a malfunction occurs. Numeric keypad 5 is used to store addresses, or called stations' telephone numbers and their corresponding abbreviations for automatically dialing a called destination number. Numeric keypad 5 is also used to store the addresses of nearby facsimile stations to which incoming calls are to be transferred. Call transfer circuit 6 includes a plurality of manually operated switches which correspond respectively to such nearby facsimile stations in order to specify one of these stations when it is desired to transfer all incoming calls to the specified station. Main controller 1 is connected to a network controller 8 through line 7 to be notified of the receipt of an incoming call to proceed to interrogate the output terminals of call transfer command circuit 6 and the output terminal of supervisory circuit 2. If there is a logic 1 at one of the output terminals of command circuit 6, main controller 1 knows that one of the nearby stations has been specified to transfer incoming calls and proceeds to recall an address from the memory 3 corresponding to the specified nearby station to reinitiate a call setup procedure to establish a second connection to the specified station. If there is an alarm signal from the supervisory circuit 2 and the outputs of command circuit 6 are all at logic 0, main controller 1 directs the address selector 4 to recall the addresses of all the nearby stations and select one of the recalled addresses to reinitiate a call setup procedure to establish a connection to the selected nearby station.

The facsimile station further includes a normal mode controller 9 which provides control in response to various facsimile command signals to be exchanged with the distant station during normal communications modes. The normal mode controller 9 is associated with the network controller 8 through a modem 12 to exchange data between main controller 1 and network controller 8. Also associated with the main controller 1 and network controller 8 is a transfer mode controller 10 which transmits the address of the selected nearby station to a calling station through an established connection during a receive mode and receives a call transfer command signal from a called station during a transmit mode. A call origination circuit 11 is operable during transmit modes to initiate a call setup procedure through the network controller 8.

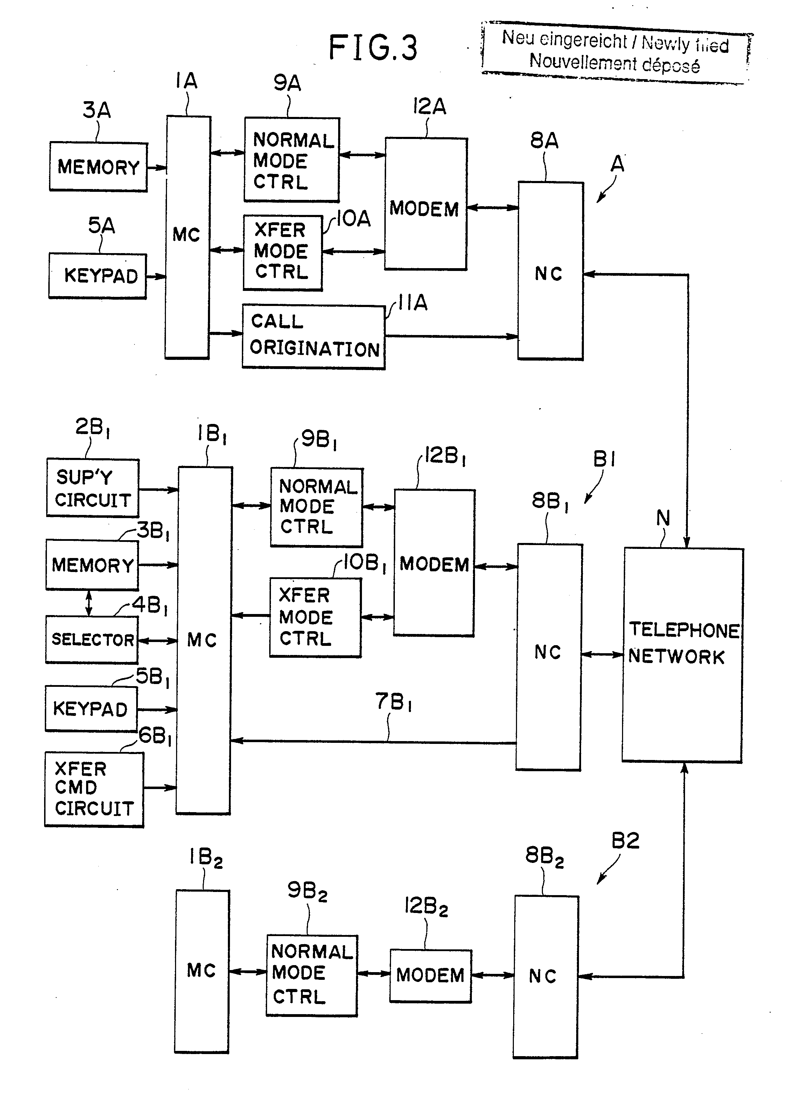

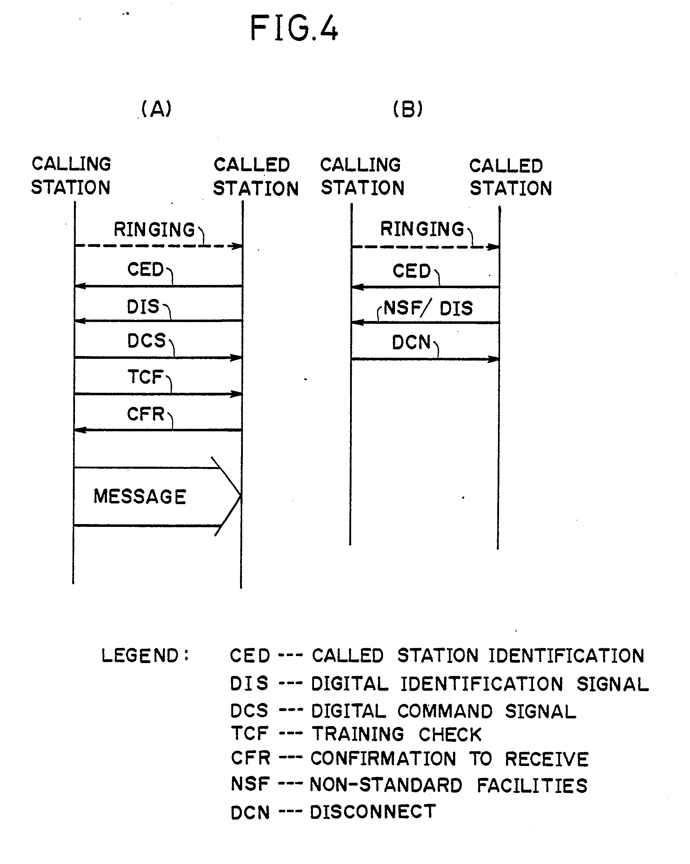

The operation of the facsimile communication system of the present invention will now be described with reference to Figs. 3 and 4. Assume that a call is directed from station A to station B1 and is then transferred to station B2. For simplicity, only those portions necessary for an understanding of the invention are illustrated in Fig. 3.

A call setup procedure is initiated in the call origination circuit 11A under control of the main controller 1A by recalling the address of the station B1 from the memory 3A in accordance with an abbreviation entered through the numeric keypad 5A. The address signal is fed to network controller 8A which in turn transmits a corresponding dialing signal to the switched telephone network N. A ringing signal is sent from the telephone network N to the network controller 8B₁ of station B. By way of control line 7B₁ the network controller 8B₁ notifies the main controller 1B₁ of the fact that an incoming call has been received. Main controller 1B₁ now proceeds to interrogate the outputs of call transfer command circuit 6B₁ and the output of supervisory circuit 2B₁ to determine whether there is a specified nearby station to transfer the incoming call or whether the own station is in a condition incapable of receiving message signals.

If any of such abnormal conditions is detected, the controller 1B₁ determines that the incoming call must be received as in a normal receive mode and directs the normal mode controller 9B₁ to initiate a pre-message procedure by returning a CED (called station identification) which is a tonal signal at 2100 Hz as specified by CCITT Recommendation T.30 followed by a digital identification signal DIS which is the format "0000 0001", as shown in part (A) of Fig. 4. These command signals are passed through modem 12B₁ and network controller 8B₁ and received by the calling station A.

At station A, the received signals are passed through the network controller 8A, modem 12A to the normal mode controller 9A, which returns a digital command signal DCS and then a training check TCF to elicit the normal mode controller 9B₁ of the called station B1 to return a confirmation-to-receive signal CFR. On receiving the CFR signal, the normal mode controller 9A of the calling station initiates a message transmission to the station B1.

If there is a specified nearby station to which all incoming calls are to be forwarded, the controller 1B₁ reads an address from the address memory 3B₁ in accordance with a call transfer switch which is operated. If there is an alarm signal from the supervisory circuit 2B₁, controller 1B₁ directs the address selector 4B₁ to selectively recalls an address of the nearby stations. In either case, the address recalled from the memory 3B₁ is fed to the transfer mode controller 10B₁, which in turn sends a "non-standard facilities" signal NSF and a DIS signal, as shown in part (B) of Fig. 4. The NSG signal comprises a first code indicating that the call must be transferred and a second code indicating the address of the station to which the call is to be transferred. These signals are sent through modem 12B₁ and network controller 8B₁ over the established connection to the calling station A followed by a disconnect signal DCN. The NSF signal is detected by the transfer mode controller 10A and the connection established between stations A and B1 is disconnected in response to receipt of the DCN signal by the calling station A. Main controller 1A transfers the detected address information to the call origination circuit 11A to reinitiate a call setup procedure to establish a connection to the station B2. The incoming call to station B2 is received by network controller 8B₂, passed through modem 12B₂ and fed to nomral mode controller 9B₂ which processes the received signal according to the normal communication mode incooperation with main controller 1B₂. This incoming call can be further diverted to another nearby station, say, station B3, should a malfunction occur in the station B2.

The foregoing description shows only one preferred embodiment of the present invention. Various modifications are apparent to those skilled in the art without departing from the scope of the present invention which is only limited by the appended claims. Therefore, the embodiment shown and described is only illustrative, not restrictive.

## Claims

1. A facsimile communication system comprising:

a first facsimile station comprising means for establishing a first connection through a switched network to a second facsimile station, releasing said first connection in response to receipt of a call transfer command signal from said second facsimile station and establishing a second connection through said network to a third facsimile station in accordance with the received command signal,

said second facsimile station including means for detecting a first condition in which the own station is capable of receiving facsimile messages and a second condition in which the own station is incapable of receiving said messages, transmitting a signal to said first station in response to the establishment of said first connection to request transmission of a facsimile message when said first condition is detected and transmitting said call transfer command signal to said first station in response to the establishment of said first connection when said second condition is detected, said command signal indicating an address of said third facsimile station.

2. A facsimile communication system as claimed in claim 1, wherein said second facsimile station further comprises a plurality of manually operated switches respectively associated with a plurality of said third facsimile stations;

a memory;

a numeric keypad for storing addresses into said memory respectively identifying said third facsimile stations; and

means responsive to the establishment of said first connection for recalling one of said addresses from said memory in accordance with an operated one of said switches for transmission to said first station as said command signal.

3. A facsimile communication system as claimed in claim 2, wherein said detecting means comprises means for detecting when said second station is not functioning properly and means for selectively recalling said addresses from said memory for transmission to said first station as said command signal.

4. A facsimile apparatus comprising:

first means operable during a transmit mode for transmitting a first address signal to a switched network to establish a first connection to a first called station;

second means operable during said transmit mode for detecting a command signal from said first called station, releasing said first connection in response to the detection of said command signal and transmitting a second address signal to said network in response to said command signal to establish a second connection to a second called station;

third means operable during a receive mode for detecting when said facsimile apparatus is in a condition incapable of receiving messages; and

fourth means operable during said receive mode for returning a signal to a calling station requesting it to initiate a message transmission when said facsimile apparatus is detected as not being in said condition and returning an address signal of another station as said second called station to the calling station when said facsimile apparatus is detected as being in said condition to cause said second means of said calling station to detect said address signal as said command signal.

5. A facsimile apparatus as claimed in claim 4, further comprising a plurality of manually operated switches respectively associated with a plurality of said second called stations;

a memory;

a numeric keypad for storing addresses into said memory respectively identifying said second called stations; and

means responsive to the establishment of said first connection during said receive mode for recalling one of said addresses from said memory in accordance with an operated one of said switches for transmission to said first station as said command signal.

6. A facsimile apparatus as claimed in claim 5, wherein said third means comprises means for detecting when said facsimile apparatus is not functioning properly and selectively recalling said addresses from said memory when said facsimile apparatus is detected as not functioning properly for transmission to said first station as said command signal.

7. A method for facsimile communication comprising:

establishing a first connection between a first facsimile station and a second facsimile station through a switched network;

transmitting an address signal of a third facsimile station from said second facsimile station to said first facsimile station through said first connection when said second facsimile station is incapable of receiving facsimile messages;

releasing said first connection in response to receipt of said address signal; and

establishing a second connection between said first facsimile station and said third facsimile station in accordance with said address signal.

# FIG.1

# FIG.2

0 278 451

FIG.3

# FIG.4

(A)                    (B)

LEGEND:    CED --- CALLED STATION IDENTIFICATION
           DIS --- DIGITAL IDENTIFICATION SIGNAL
           DCS --- DIGITAL COMMAND SIGNAL
           TCF --- TRAINING CHECK
           CFR --- CONFIRMATION TO RECEIVE
           NSF --- NON-STANDARD FACILITIES
           DCN --- DISCONNECT